# EUROPEAN PATENT APPLICATION

(11) **EP 4 657 470 A1**
(43) Date of publication of application: **03.12.2025**
(21) Application number: 25157432.3
(22) Date of filing: 12.02.2025
(51) Int. Cl.: H01B 13/012, B65H 55/00, B65H 65/00, B65H 75/00

(54) **DEVICE FOR WINDING AND RETAINING ELONGATED CONDUCTORS WITH ROBOTIC MANIPULATION CAPABILITY**

(30) Priority: 29.05.2024 US 202463652851 P; 10.02.2025 US 202519049353
(71) Applicant: Aptiv Technologies AG, 8200 Schaffhausen (CH)
(72) Inventor: LEWIS, Ryan, 8200 Schaffhausen (CH); MICHAEL, Jeffrey, 8200 Schaffhausen (CH); KLOTZ, Ron, 8200 Schaffhausen (CH); DEAN, Robert, 8200 Schaffhausen (CH); BILAS, Jared, 8200 Schaffhausen (CH); SUDIK JR., Joseph, 8200 Schaffhausen (CH); PETERSON, David R., 8200 Schaffhausen (CH)
(74) Representative: Bardehle Pagenberg Partnerschaft mbB Patentanwälte Rechtsanwälte

(57) **Abstract**

The present disclosure provides a device designed for the efficient handling and organization of elongated conductors. The device includes a pallet (104, 504, 704, 1004) specifically configured for winding an elongated conductor (106, 506, 706, 1006) around it, ensuring orderly storage and transport. Connector retaining features (510) are incorporated to secure terminating connectors (508) of the conductor (106, 506, 706, 1006) at predetermined locations on the pallet's surface (118), facilitating easy removal by a robotic device (102, 702, 1002). Additionally, the device is equipped with manipulation features that enable the robotic device (102, 702, 1002) to effectively manipulate the pallet (104, 504, 704, 1004), enhancing automation in processes involving the handling of elongated conductors (106, 506, 706, 1006). This configuration allows for streamlined operations in environments where robotic devices are employed for tasks such as assembly, storage, or transportation of conductors.

## Description

The subject matter disclosed herein relates to methods and apparatuses for automated handling and installation of elongated conductors and, in particular, to a pallet that holds an electrical wiring harness for use with a robotic device and a method of using such a pallet to automatically install the electrical wiring harness, e.g., within a vehicle structure.

Currently automotive electrical wiring harnesses are held together with tape or straps and presented to assembly operators on a vehicle assembly line in a folded condition. The assembly operator manually removes the straps, manipulates and unfolds the wiring harness into the desired shape, plugs connectors in the wiring harness into corresponding connectors on the vehicle, and attaches the wiring harness to the vehicle structure in the appropriate location by inserting attachment clips on the wiring harness into corresponding retaining features in the vehicle structure.

In the field of automated manufacturing and assembly, various approaches have been developed to handle and manipulate elongated conductors, such as cables or wires, during the assembly process. Traditional methods often involve manual handling, which can be labor-intensive and prone to errors, particularly in high-volume production environments. To address these challenges, automated systems have been introduced to improve efficiency and accuracy. These systems typically involve the use of robotic arms or other mechanical devices to assist in the unwinding and placement of conductors. However, these systems often require complex programming and precise calibration to ensure that the conductors are handled correctly, which can increase setup time and costs.

Another approach involves the use of specialized pallets or spools designed to hold elongated conductors in a specific configuration. These pallets are often used in conjunction with automated machinery to facilitate the unwinding and routing of conductors during assembly. While this method can reduce manual labor, it still requires careful alignment and coordination between the pallet and the robotic device to ensure that the conductors are correctly positioned and connected. Additionally, the integration of terminating connectors with corresponding connectors often necessitates additional equipment or manual intervention, which can further complicate the assembly process.

Some systems have attempted to integrate the handling and connection processes by using advanced robotic systems capable of both manipulating the conductors and making the necessary electrical connections. These systems often employ sophisticated sensors and control algorithms to achieve the desired level of precision and reliability. Despite these advancements, challenges remain in achieving seamless integration of the various components involved in the assembly process, particularly when dealing with conductors of varying lengths and configurations.

However, none of these approaches have provided a comprehensive solution that combines the features described in this disclosure.

**In** some aspects, the techniques described herein relate to a device, including: a pallet configured for winding an elongated conductor around the pallet; connector retaining features configured to retain terminating connectors of the elongated conductor to the pallet in a predesignated location on a surface of the pallet, the connector retaining features configured to allow removal of the elongated conductor by a robotic device; and manipulation features configured to allow the robotic device to manipulate the pallet.
**FIG. 1** is an isometric view of a robotic device holding a pallet with a wiring harness wrapped around the pallet according to some embodiments.
**FIG. 2** is an isometric view of the robotic device and the pallet of **FIG. 1** according to some embodiments.
**FIG. 3** is cross-section top view of a securing feature of the pallet of **FIG. 1** according to some embodiments.
**FIG. 4** is a cross-section side view of the securing feature of **FIG. 3** according to some embodiments.
**FIG. 5** is another isometric view of a robotic device holding a pallet with a different wiring harness wrapped around the pallet according to some embodiments.
**FIG. 6** is a close-up isometric view of a securing feature on the pallet of **FIG. 5** holding a concenter of the wiring harness wrapped around the pallet according to some embodiments.
**FIG. 7** is an isometric view of a robotic device according to some embodiments.
**FIG. 8** is an isometric view of a robotic device of **FIG. 7** holding a pallet with a wiring harness wrapped around the pallet and a vehicle structure to which the wiring harness will be attached according to some embodiments.
**FIG. 9** is an isometric view of the robotic device of **FIG. 7** attaching the wiring harness to the vehicle structure according to some embodiments.
**FIG. 10** is an isometric view of a robotic device holding a pallet with a wiring harness wrapped around the pallet and a vehicle structure to which the wiring harness will be attached according to some embodiments.
**FIG. 11** is an isometric view of the pallet of **FIG. 10** with the wiring harness wrapped around the pallet according to some embodiments.
**FIG. 12** is an isometric view of the pallet of **FIG. 10** according to some embodiments.
**FIG. 13** is top view of a notch in the pallet of **FIG. 10** with the wiring harness wrapped through the notch according to some embodiments.
**FIG. 14** is an isometric view of a sub-pallet of the pallet of **FIG. 10** according to some embodiments.

The present disclosure describes an apparatus and an assembly method for presenting a wiring harness to a robotic device which automatically plugs connectors in the wiring harness into corresponding connectors on the vehicle and attaches the wiring harness to the vehicle structure in the appropriate location by inserting attachment clips on the wiring harness to corresponding retaining features in the vehicle structure.

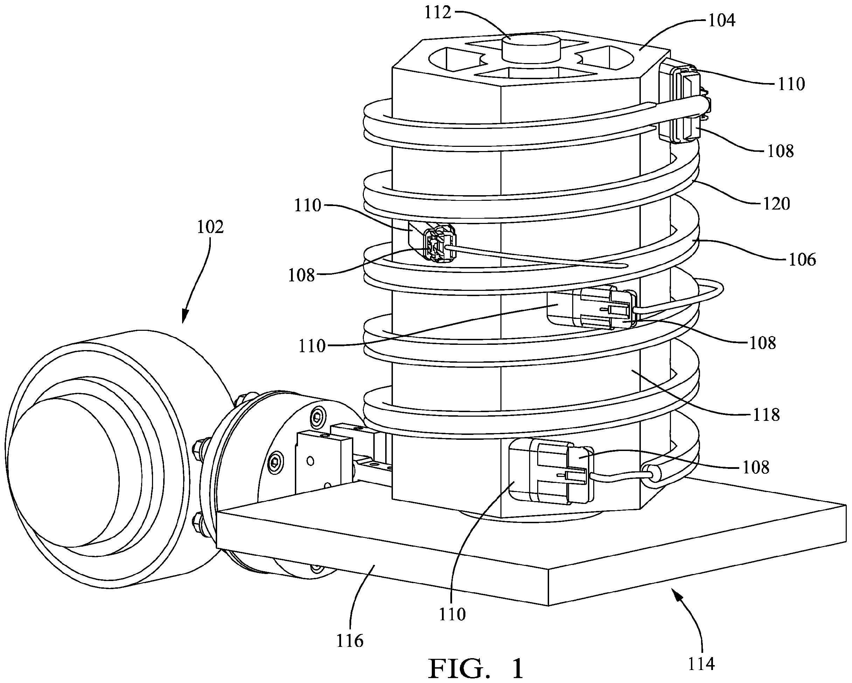

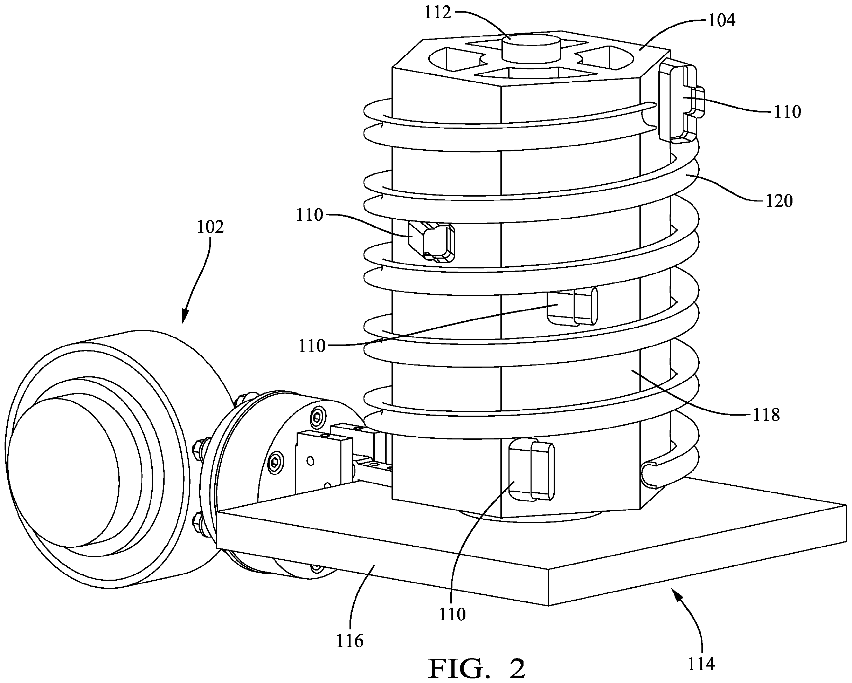

**FIG. 1** and **FIG. 2** are isometric views of a robotic device 102 holding a carrier, cassette, or pallet, hereafter referred to as the pallet 104 with an electrical wiring harness, hereafter referred to as the wiring harness 106 wrapped around the pallet 104. The pallet 104 positions each connector 108 and/or attachment features, such as clips, brackets, etc., of the wiring harness 106 in a retaining feature 110 at or near a designated location on the pallet 104 so that the robotic device 102 may positively locate each of the connector 108 and/or attachment feature on the pallet 104. In the example illustrated in **FIG. 1 through FIG. 6****,** the pallet 104 has a generally has the shape of a hexagonal cylinder. In other embodiments, the pallet 104 may have a different shape, e.g., an octagonal cylinder shape, a round cylinder shape, etc. The pallet 104 is configured to rotate round a shaft 112 extending from a pallet carrier 114. In the illustrated example, the pallet carrier 114 has a support plate 116 from which the shaft 112 extends. The support plate 116 is configured to be gripped and manipulated by the robotic device 102. In the illustrated example, an outer surface 118 of the pallet 104 defines a helical groove 120 that is configured to hold the wiring harness 106 and guide the placement of the wiring harness 106 on the outer surface 118 of the pallet 104. In alternative embodiments of the pallet 104, the outer surface 118 may not define this helical groove 120. The pallet 104 may be reusable or may be formed of materials that are recyclable or disposable.

The robotic device 102 may rely solely on a predesignated location on the pallet 104 to precisely locate the connectors 108 and attachment features, sequentially remove them from the pallet 104, and attach them to the corresponding connectors and/or retaining features in the vehicle structure. The robotic device 102 may additionally or alternatively rely on additional location technology, such as machine vision systems, bar code readers, QR code readers, or RFID tag readers to identify and locate the connectors 108 and attachment features.

**FIG. 2** illustrates the robotic device 102, the pallet 104, and the pallet carrier 114 without the wiring harness 106. **FIG. 2** more clearly shows the shapes of the connector retaining features 110 and the helical groove 120 of the pallet 104.

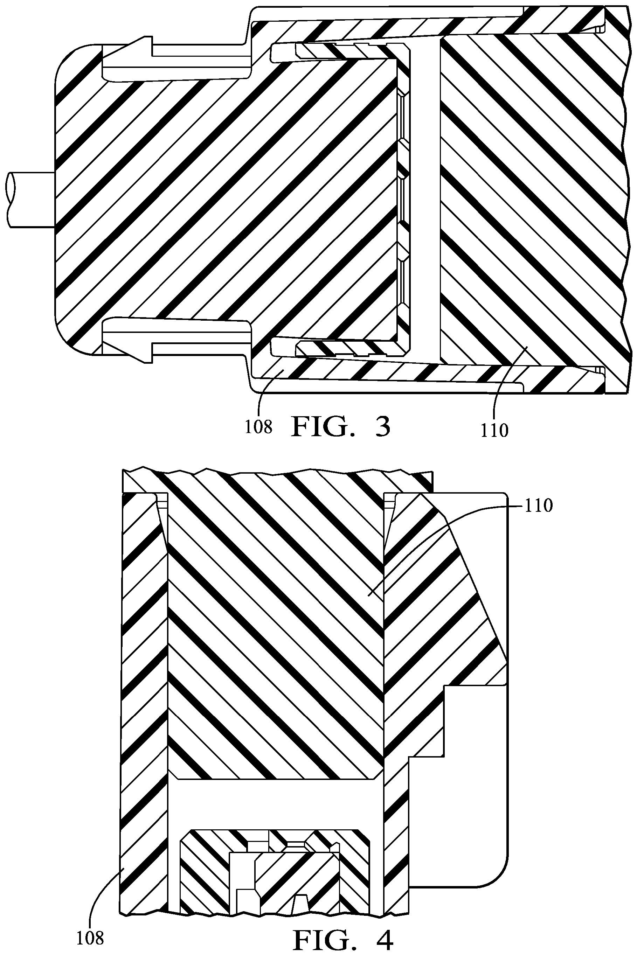

**FIG. 3** and **FIG. 4** show cross section views of a connector 108 secured within a retaining feature 110 of the pallet 104. In this example, the connector 108 is secured within the retaining feature 110 by a friction fit between the connector 108, and the retaining feature 110. The details of the retaining feature shown here may be applied to any of the connector retaining features of any of the pallets shown herein and to many other embodiments that may be envisioned. In alternative embodiments, the connector 108 may be secured within the retaining feature 110 by a locking feature on the connector 108 that is used to secure the connector 108 to a corresponding mating connector (not shown). In yet another alternative, the retaining feature 110 may be a releasable adhesive, such as a fugitive glue (colloquially known as booger glue). The connector 108 is held within the retaining feature 110 until it is released and/or removed by the robotic device 102.

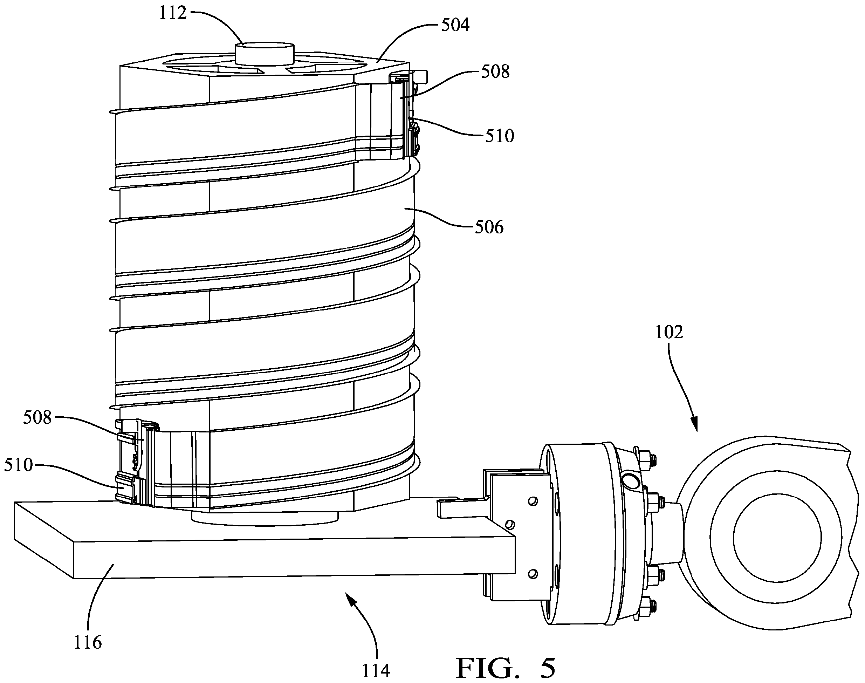

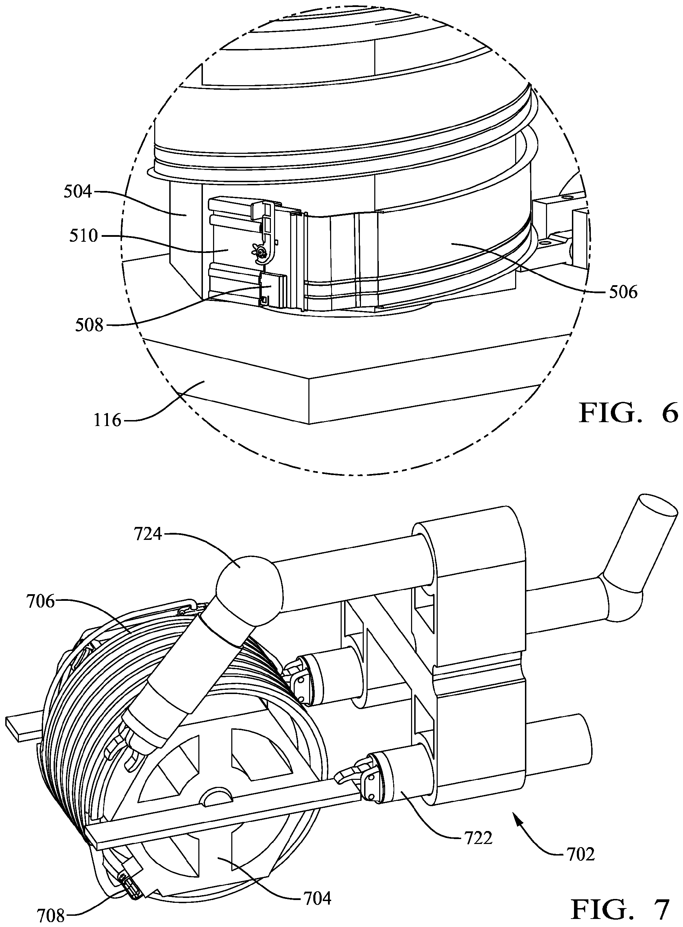

**FIG. 5** and **FIG. 6** illustrate an alternative pallet 504 that is also usable with the robotic device 102. The pallet 504 is configured to hold a wiring harness 506 that includes a flat flexible cable (FFC) rather than a bundle of individual wire as in the wiring harness 106 shown in **FIG 1****.** This wiring harness 506 also has connectors 508 that are secured to the pallet 504 by retaining features 510.

**FIG. 7** is an isometric view of a robotic device 702 having a first robotic arm 722 that handles the pallet 704 with the wiring harness 706 and a second robotic arm 724 that removes the connectors 708 and attachment clips from the pallet 704.

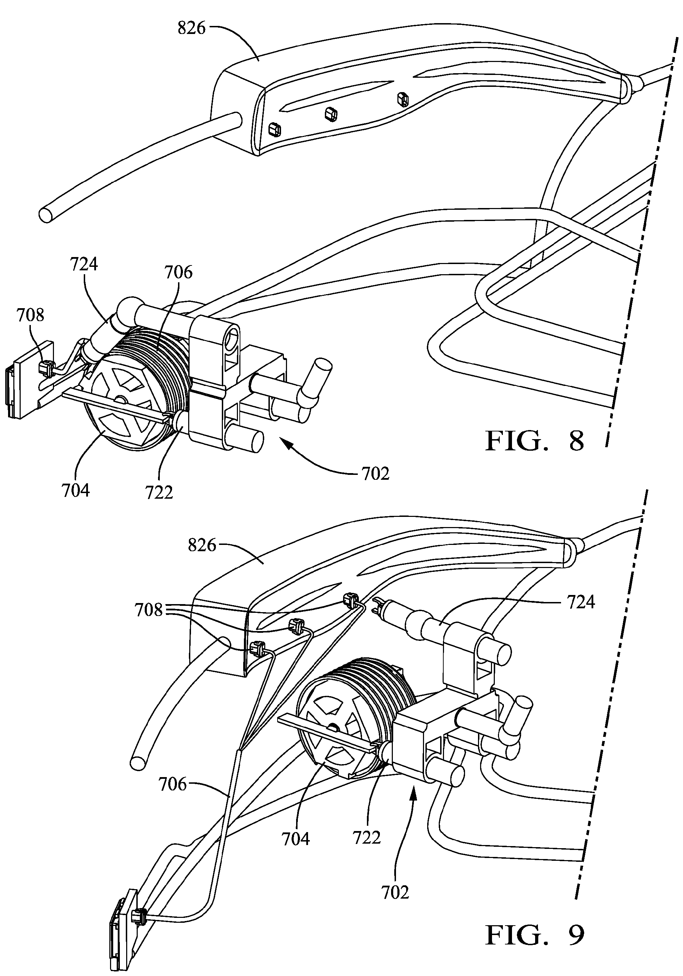

As shown in **FIGs. 8 and 9****,** the second robotic arm 724 and places the connectors 708 and attachment clips in the desired location in the vehicle structure 826 as the wiring harness 706 "unwinds" from the pallet 704.

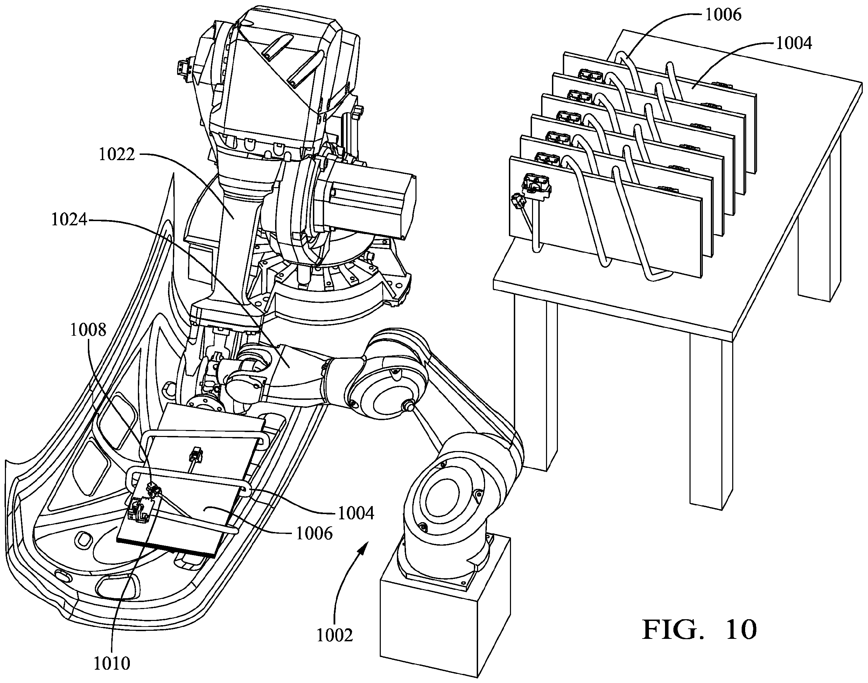

**FIG. 10** is an isometric view of another robotic device 1002 having a first robotic arm 1022 that handles a planar pallet 1004 with the wiring harness 1006 wrapped around the pallet 1004 and a second robotic arm 1024 that removes the connectors 1008 and attachment clips from the pallet 1004 and attaches them to the vehicle structure. The pallet 1004 may be formed of a variety of reusable, recyclable, or disposable materials, such as corrugated cardboard or plastic.

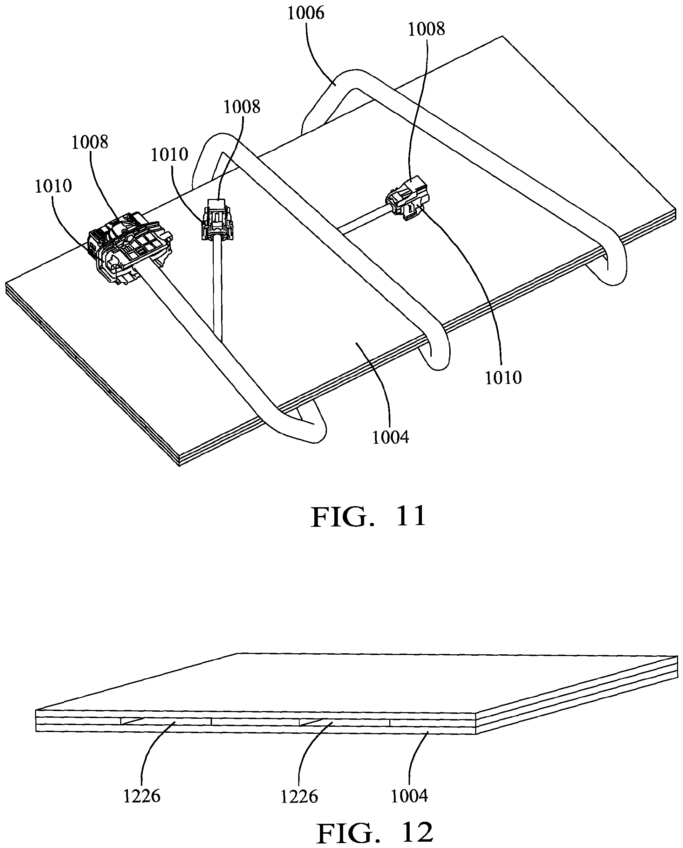

**FIGs. 11 and 12** show views of the pallet 1004 with the wiring harness 1006 wrapped around the pallet 1004. The pallet 1004 positions each connector 1008 and/or attachment feature in a retaining feature 1010 at or near a designated location on the pallet 1004 so that the robotic device 1002 may positively locate each of the connectors and/or attachment devices on the pallet 1004.

As shown in **FIG. 12****,** the pallet 1004 may define cavities 1226 extending through the interior of the pallet 1004 that are configured to receive a finger extending from the first robotic arm 1022 to enhance the ability of the first robotic arm 1022 to grip and manipulate the pallet 1004.

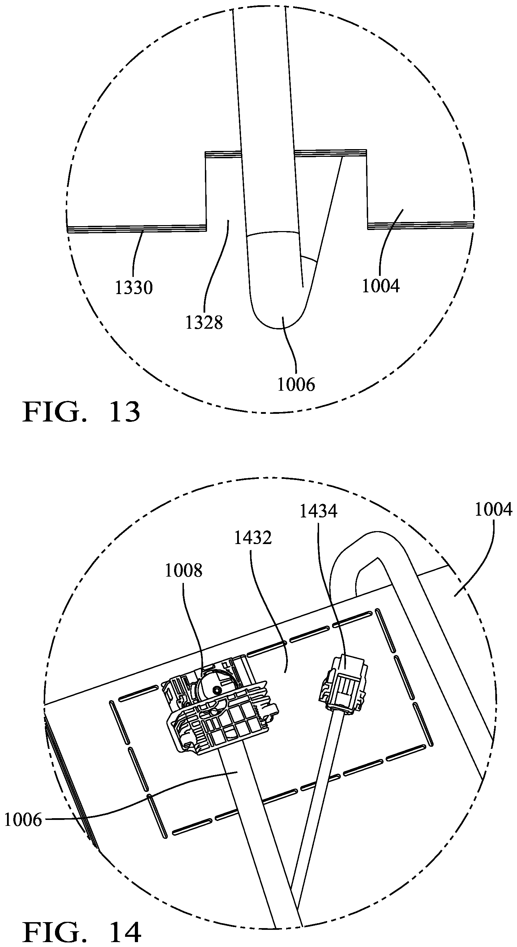

The pallet 1004, as shown in **FIG. 13****,** may also include notches 1328 on outer edges 1330 of the pallet 1004 through which the wiring harness 1006 is wrapped around the pallet 1004 to positively locate and better retain the wiring harness 1006 on the pallet 1004.

The pallet 1004, as shown in **FIG. 14****,** may further include a sub-pallet 1432 that is configured to retain a branch 1434 of the wiring harness 1006 in a predesignated location on a surface of the sub-pallet. The sub-pallet 1432 is detachable from the pallet 1004 and may be separately gripped and manipulated by the robotic device 1002. This may be beneficial when the branch 1434 includes multiple connectors 1008 and/or attachment features.

The pallets 104, 504, 704, 1004 described herein allows the replacement of manipulation and installation of the wiring harness 106, 506, 706, 1006 into the vehicle structure by a the robotic device 102, 702, 1002, thereby reducing or eliminating human labor effort in the process of installing wiring harness 106, 506, 706, 1006 in the vehicle, while also reducing quality issues due to missing or partial connections or missing or improperly placed attachment clips.

While the examples presented here are directed to installing an electrical wiring harness in a vehicle, this concept can also be applied to installing electrical wiring harnesses in other applications, for example aerospace products, industrial equipment, or home appliances. Further, while the examples presented here are directed to installing an electrical wiring harness in a vehicle, this concept can also be applied to other types of elongated conductors having terminal connections and/or attachment clips, such as fiber optic cables, pneumatic tubes, hydraulic tubes, or a hybrid combination of any of these types of conductors.

### Discussion of Possible Embodiments

The following are non-exclusive descriptions of possible embodiments of the present invention.

In some aspects, the techniques described herein relate to a device, including: a pallet configured for winding an elongated conductor around the pallet; connector retaining features configured to retain terminating connectors of the elongated conductor to the pallet in a predesignated location on a surface of the pallet, the connector retaining features configured to allow removal of the elongated conductor by a robotic device; and manipulation features configured to allow the robotic device to manipulate the pallet.

The device of the preceding paragraph can optionally include, additionally and/or alternatively any, one or more of the following features/steps, configurations and/or additional components.

In some embodiments of the device, the connector retaining features further include locating features selected from a list consisting of a bar code, a QR code, and an RFID tag.

In some embodiments of the device, the pallet has a generally cylindrical shape.

In some embodiments of the device, the pallet includes a support plate and a shaft extending from the support plate, the pallet configured to rotate on its axis around the shaft.

In some embodiments of the device, an outer surface of the pallet defines a helical groove configured to guide placement of the elongated conductor on the outer surface of the pallet.

In some embodiments of the device, the pallet has a generally planar shape.

In some embodiments of the device, the pallet defines notches on outer edges of the pallet in which the elongated conductor is wrapped around the pallet.

In some embodiments of the device, the pallet defines a sub-pallet configured to retain a portion of the elongated conductor in a predesignated location on a surface of the sub-pallet, the sub-pallet being detachable from the pallet by the robotic device.

In some embodiments of the device, the pallet defines internal cavities that are configured to provide a gripping location for the robotic device.

In some embodiments of the device, the connector retaining features are configured to be in a friction fit with the terminating connectors.

In some embodiments of the device, the connector retaining features are configured to lock the terminating connectors in place.

I In some embodiments, the device further includes the robotic device which is configured to hold and manipulate the pallet in order to allow removal of the elongated conductor from the pallet and is further configured to interconnect the terminating connectors with corresponding connectors.

In some embodiments of the device, the robotic device and the pallet cooperate to unwind the elongated conductor from the pallet.

In some embodiments of the device, the elongated conductor is an electrical wiring harness, and the terminating connectors are electrical connectors.

In some embodiments of the device, the electrical wiring harness includes a flat flexible electrical cable.

In some embodiments of the device, the elongated conductor further includes an attachment clip and wherein the robotic device is further configured to secure the attachment clip to a structure.

In some embodiments of the device, the robotic device to rotate the pallet around an axis.

In some embodiments of the device, the pallet defines a sub-pallet that is configured to retain a portion of the elongated conductor in a predesignated location on a surface of the sub-pallet, the sub-pallet configured to be detached from the pallet by the robotic device.

In some embodiments of the device, the pallet defines internal cavities that are configured to provide a gripping location for the robotic device.

In some embodiments of the device, the robotic device includes a first arm configured to grip and manipulate the pallet, and a second arm configured to grip and manipulate the elongated conductor.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. A device, comprising:
a pallet (104, 504, 704, 1004) configured for winding an elongated conductor (106, 506, 706, 1006) around the pallet (104, 504, 704, 1004);
connector (108) retaining features (510) configured to retain terminating connectors (508, 708, 1008) of the elongated conductor (106, 506, 706, 1006) to the pallet (104, 504, 704, 1004) in a predesignated location on a surface (118) of the pallet (104, 504, 704, 1004), the connector retaining features (510) configured to allow removal of the elongated conductor (106, 506, 706, 1006) by a robotic device (702); and
manipulation features configured to allow the robotic device (102, 702, 1002) to manipulate the pallet (104, 504, 704, 1004).

2. The device in accordance with claim 1, wherein the connector retaining features (510) further comprise locating features selected from a list consisting of a bar code, a QR code, and an RFID tag.

3. The device in accordance with claim 1 or 2, wherein the pallet (104, 504, 704) has a generally cylindrical shape.

4. The device in accordance with any one of the preceding claims, wherein the pallet (104, 504, 704) comprises a support plate (116) and a shaft (112) extending from the support plate (116), the pallet (104, 504, 704) configured to rotate on its axis around the shaft (112).

5. The device in accordance with any one of the preceding claims, wherein an outer surface (118) of the pallet (104, 504, 704) defines a helical groove (120) configured to guide placement of the elongated conductor (106, 506, 706) on the outer surface (118) of the pallet (104, 504, 704).

6. The device in accordance with any one of the preceding claims, wherein the pallet (1004) has a generally planar shape.

7. The device in accordance with claim 6, wherein the pallet (1004) defines notches (1328) on outer edges (1330) of the pallet (1004) in which the elongated conductor (1006) is wrapped around the pallet (1004).

8. The device in accordance with claim 6 or 7, wherein the pallet (1004) defines a sub-pallet (1432) configured to retain a portion of the elongated conductor (1006) in a predesignated location on a surface of the sub-pallet (1432), the sub-pallet (1432) being detachable from the pallet (1004) by the robotic device (1002).

9. The device in accordance with any one of claims 6 to 8, wherein the pallet (1004) defines internal cavities (1226) that are configured to provide a gripping location for the robotic device (1002).

10. The device in accordance with any one of the preceding claims, wherein the connector retaining features (510) are configured to be in a friction fit with the terminating connectors (508).

11. The device in accordance with any one of the preceding claims, wherein the connector retaining features (510) are configured to lock the terminating connectors (508) in place.

12. The device in accordance with any one of the preceding claims, further comprising:
the robotic device (102, 702, 1002) which is configured to hold and manipulate the pallet (104, 504, 704, 1004) in order to allow removal of the elongated conductor (106, 506, 706, 1006) from the pallet (104, 504, 704, 1004) and further configured to interconnect the terminating connectors (508, 708, 1008) with corresponding connectors (508, 708, 1008).

13. The device in accordance with claim 12, wherein the robotic device (102, 702, 1002) and the pallet (104, 504, 704, 1004) cooperate to unwind the elongated conductor (106, 506, 706, 1006) from the pallet (104, 504, 704, 1004).

14. The device in accordance with claim 12 or 13, wherein the elongated conductor (106, 506, 706, 1006) is an electrical wiring harness, and the terminating connectors (508, 708, 1008) are electrical connectors.

15. The device in accordance with claim 14, wherein the electrical wiring harness (506) comprises a flat flexible electrical cable.
